# EUROPEAN PATENT APPLICATION

(11) **EP 2 385 394 A2**
(43) Date of publication of application: **09.11.2011**
(21) Application number: 11163257.6
(22) Date of filing: 20.04.2011
(51) Int. Cl.: G01V 1/04

(54) **Matrix ground force measurement of seismic transducers and methods of use**

(30) Priority: 05.05.2010 US 331599 P
(71) Applicant: Conoco Phillips Company, Houston, TX 77079 (US)
(72) Inventor: Eick, Peter, Houston, TX 77094 (US); Janiszewski, Frank, Richmond, TX 77407 (US); Brewer, Joel, Houston, TX 77094 (US); Shan, Shan, Houston, TX 77041 (US)
(74) Representative: Simpson, Paul Christopher

(57) **Abstract**

Methods and systems are provided for inducing seismic vibrations into an elastic medium such as subterranean formations. The methods and systems utilize seismic transducers (200) having a sensor matrix (250) for measurement of baseplate force distributions. Certain embodiments include a sensor matrix that is configured to measure a distribution of discrete force measurements across the surface area of the baseplate (230). Advantages of including such sensor matrices include a more accurate prediction of seismic transducer energy output. That is, these measurements can be used as feedback to adjust the operation of the seismic transducer. Additionally, these force measurements may be used to provide for a better interpretation of gathered seismic data. These advantages ultimately translate to improved seismic surveys, having higher resolution of the formations surveyed and reaching greater depths.

## Description

### FIELD OF THE INVENTION

The present invention relates generally to methods and systems for inducing seismic vibrations into an elastic medium. More particularly, but not by way of limitation, embodiments of the present invention include methods and systems for inducing seismic vibrations into subterranean formations which utilize a sensor matrix for measurement of baseplate force distributions.

### BACKGROUND

Various methods of geophysical exploration have been developed to aid in the determining the nature of subterranean formations for exploratory oil and gas drilling. Several surveying systems have been developed that utilize one or more vibratory energy sources to induce seismic waves that are directed into the ground and reflected back to the surface by different geological subsurface layers.

In these reflection-type seismic surveys, the reflected seismic waves are detected at the surface by a group of spaced apart receivers called geophones, accelerometers, seismometers or similar transducers. These transducers are collectively referred to as "geophones" herein following industry convention, but it is understood that they could be any sensor that converts seismic energy into some readable data. The reflected seismic waves detected by the geophones are analyzed and processed to generate seismic data representative of the nature and composition of the subterranean formation at various depths, including the nature and extent of hydrocarbon deposits. In this way, the seismic information collected by geophones can be used to produce seismic reflection signals which can be processed to form images of the subsurface.

It has become common in many cases to use, as the source of propagating elastic waves, a hydraulically-operated vibratory source more simply referred to as a vibrator. There are other forms of energy sources for vibrators like electromechanical or pure electric. All of these systems typically generate vibrations or shock waves by using a reaction mass member that is actuated by a hydraulic or electric system and electrically controlled by a servo valve. In a typical embodiment, a vibrator comprises a double ended piston rigidly affixed to a coaxial piston rod. The piston is located in reciprocating relationship in a cylinder formed within a heavy reaction mass. Means are included for alternately introducing hydraulic fluid under high pressure to opposite ends of the cylinder or for an electric coil and magnet type assembly to impart a reciprocating motion to the piston relative to the reaction mass. The piston rod extending from the reaction mass is rigidly coupled to a baseplate, which is maintained in intimate contact with ground surface. Since the inertia of the reaction mass tends to resist displacement of the reaction mass relative to the earth, the motion of the piston is coupled through the piston rod and baseplate to impart vibratory seismic energy in the earth.

Typically, vibrators are transported by carrier vehicle, and it is also known to prevent decoupling of the baseplate from the ground by applying a portion of the carrier vehicle's weight to the baseplate during operation. The weight of the carrier vehicle is frequently applied to the baseplate through one or more spring and stilt members, each having a large compliance, with the result that a static bias force is imposed on the baseplate, while the dynamic forces of the baseplate are decoupled from the carrier vehicle itself. In this way, the force from the vibrating mass is transferred through the baseplate into the earth at a desired vibration frequency. The hydraulic system forces the reaction mass to reciprocate vertically, at the desired vibration frequency, through a short vertical stroke.

This type of vibrational seismic exploration system typically uses a quasi-sinusoidal reference signal, or so-called pilot signal, of continuously varying frequency, selected band width, and selected duration to control the introduction of seismic waves into the earth. The pilot signal is converted into a mechanical vibration in a land vibrator having a baseplate which is coupled to the earth. The land vibrator is typically mounted on a carrier vehicle, which provides locomotion. During operation, the baseplate is contacted with the earth's surface and the weight of the carrier vehicle is applied to the baseplate. A servo-hydraulic piston connected to the baseplate is then excited by the pilot signal, causing vibration of the baseplate against the earth.

When conducting seismic surveys and analyzing the seismic data produced by the seismic surveys, it is important to accurately measure the energy output of the seismic source. A significant problem with conventional systems employing a vibrating baseplate to impart seismic waves into the earth is that the actual motion of the baseplate, and thus the actual seismic energy imparted to the earth, is different from the ideal motion represented by the pilot signal. The difference between the pilot signal and the actual baseplate motion is problematic because, in the past, the pilot signal was used to pulse-compress the reflected seismic signal either through correlation or inversion. Thus, where the actual motion of the baseplate differs from the ideal motion corresponding to the pilot signal, the pulse-compressed reflected seismic signal that is produced by correlation or more modernly by inversion is inaccurate.

The data gathering and correlating portion of the various seismic exploration systems have been improved to the point that problems have been discovered with the performance of existing baseplates. These problems are related to the fact that baseplates have resonant frequencies, and they vibrate and flex, all of which produce distortions in the generated energy signal. These distortions are carried completely through the process and detrimentally affect the geological information produced.

Thus, accurately measuring the actual energy output of the seismic source is important for properly interpreting seismic data. Conventional methods to estimate the total energy output of seismic sources include theoretical estimation, load cells, and surface mount accelerometers. Theoretical estimation methods unfortunately fail to predict the actual output forces as accurately as desired. Load cells only measure baseplate forces over a small region. Surface mount accelerometers only measure the acceleration of the baseplate at the mount point and are not representive of the whole baseplate. Indeed, all of the conventional methods fail to provide the desired level of accuracy in predicting seismic energy output. Additionally, the conventional methods fail to adequately measure forces across the entire baseplate. Because baseplates necessarily flex during use, forces experienced across baseplates necessarily vary across the area of the baseplate. In this way, conventional methods often suffer from measuring baseplate movement or forces at a specific point of the baseplate or seismic transducer. These disadvantages usually become more pronounced and serious as the seismic transducer operates at higher frequencies.

Accordingly, there is a need in the art for improved seismic vibrator assemblies and baseplates thereof that address one or more disadvantages of the prior art.

### SUMMARY

The present invention relates generally to methods and systems for inducing seismic vibrations into an elastic medium. More particularly, but not by way of limitation, embodiments of the present invention include methods and systems for inducing seismic vibrations into subterranean formations which utilize a sensor matrix for measurement of baseplate force distributions.

One example of a method for measuring force distributions from a seismic source comprises the steps of: providing a sensor matrix comprising a plurality of force sensors, wherein the force sensors are distributed throughout a substantially planar surface, wherein the force sensors are adapted to individually measure a compressive force applied to each sensor perpendicular to the substantially planar surface; providing a seismic transducer apparatus comprising a frame, a baseplate attached to the frame, the baseplate having a lower surface and having the sensor matrix affixed to the lower surface, a reaction mass supported by the frame, and a driver configured to actuate the reaction mass in a reciprocating motion so as to impart vibratory energy to the baseplate; engaging the ground surface with the seismic transducer apparatus; actuating the reaction mass via an output of the driver in a reciprocating motion; allowing vibratory energy to be imparted to the baseplate; determining a plurality of force measurements from the sensor matrix, each force measurement corresponding to each force sensor.

One example of a seismic transducer apparatus for inducing energy waves in an elastic medium comprises: a sensor matrix comprising a plurality of force sensors, wherein the force sensors are distributed throughout a substantially planar surface, wherein the force sensors are adapted to individually measure a compressive force applied to each sensor perpendicular to the substantially planar surface; a seismic transducer apparatus comprising a frame, a baseplate attached to the frame, the baseplate having a lower surface and having the sensor matrix affixed to the lower surface, a reaction mass supported by the frame, a driver configured to actuate the reaction mass in a reciprocating motion so as to impart vibratory energy to the baseplate; a processor communicatively coupled to the sensor matrix wherein the processor is configured to receive a force measurement from each force sensor and determine a true ground force measurement; a feedback controller communicatively coupled to the processor; wherein the processor is further configured to compare the true ground force measurement to the pilot signal of the feedback controller to produce a difference between the true ground force measurement and the pilot signal; and wherein the feedback controller is configured to vary the pilot signal to minimize the difference between the true ground force measurement and the pilot signal.

The features and advantages of the present invention will be apparent to those skilled in the art. While numerous changes may be made by those skilled in the art, such changes are within the spirit of the invention.

### BRIEF DESCRIPTION OF THE DRAWINGS

A more complete understanding of the present disclosure and advantages thereof may be acquired by referring to the following description taken in conjunction with the accompanying figures, wherein:

Figure 1 illustrates a schematic of a seismic exploration system in accordance with one embodiment of the present invention.

Figure 2 illustrates a side view of a seismic transducer having a sensor matrix affixed to a lower surface of a baseplate in accordance with one embodiment of the present invention.

Figure 3 illustrates a side view of a baseplate having a sensor matrix affixed thereto with certain other optional enhancements in accordance with one embodiment of the present invention.

Figure 4 illustrates a schematic of a system for using and processing sensor matrix measured data.

While the present invention is susceptible to various modifications and alternative forms, specific exemplary embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION

The present invention relates generally to methods and systems for inducing seismic vibrations into an elastic medium. More particularly, but not by way of limitation, embodiments of the present invention include methods and systems for inducing seismic vibrations into subterranean formations which utilize a sensor matrix for measurement of baseplate force distributions.

Seismic transducers are provided having a sensor matrix for measurement of baseplate force distributions. In certain embodiments, the sensor matrix is configured to measure a distribution of discrete force measurements across the surface area of the baseplate. Advantages of including such sensor matrices include, but are not limited to, a more accurate prediction of seismic transducer energy output. That is, these measurements can be used as feedback to adjust the operation of the seismic transducer. Additionally, these force measurements may be used to provide for a better interpretation of gathered seismic data. These advantages ultimately translate to improved seismic surveys, having higher resolution of the formations surveyed and resulting in surveys reaching greater depths.

Reference will now be made in detail to embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention cover such modifications and variations that come within the scope of the invention.

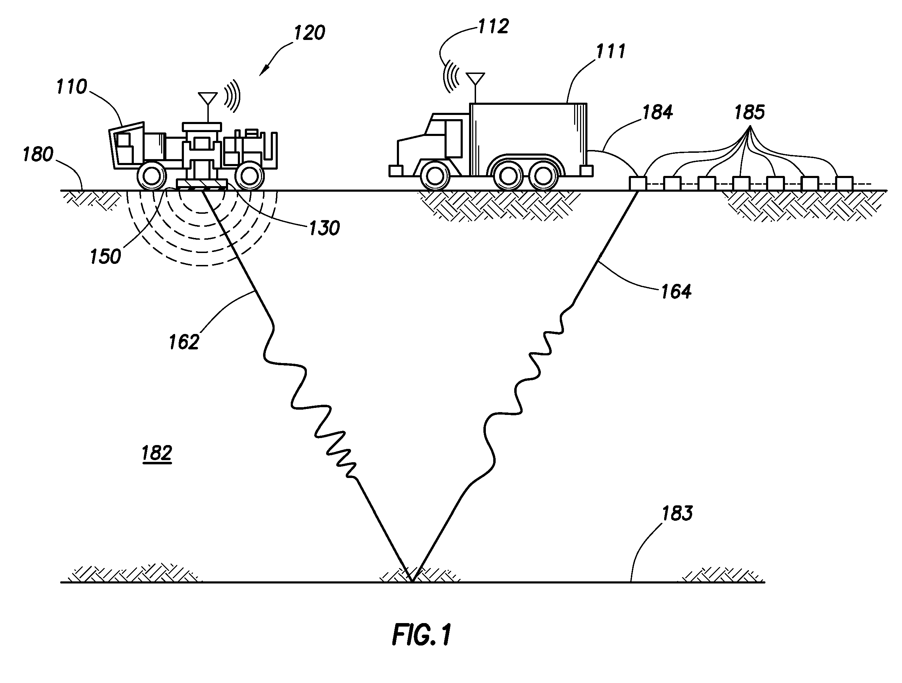

Figure 1 illustrates a side view of one example of a seismic exploration system in accordance with one embodiment of the present invention. A pilot signal is generated in recorder/processor carrier vehicle 111 and sent by radio wave link 112 to a land vibrator 120. Land vibrator 120 converts the pilot signal into mechanical motion that vibrates baseplate 130. Dampener 138 is secured or otherwise affixed to the lower surface of baseplate 130. Dampener 138 contacts ground surface 180 of the earth and is coupled to ground surface 180 by the weight of carrier vehicle 110. Baseplate 130 imparts induced seismic waves 162 through dampener 138 into subsurface 182 of the earth. Notably, in the particular embodiment depicted here, sensor matrix 150 extends across baseplate 130 so as to cover the substantial entirety of the lower surface of baseplate 130. Sensor matrix 150, which comprises a large number of individual force sensors (not shown), measures the forces applied at discrete points over the lower surface of baseplate 130. These discrete force measurements are used later for inversion and separation of the seismic data from the acquired setup. This discrete force measurement is the true ground force of the seismic source and replaces the ground force estimate of conventional controllers.

Induced seismic wave 162 travels downward through subsurface 182 and is altered (i.e., refracted and/or reflected) by subsurface strata 183. Altered seismic waves 164 travels from subsurface strata 183 upward through subsurface 182 to surface 180. Seismic receivers 185, such as geophones, located on surface 180, are generally spaced apart from each other and from land vibrator 120. Seismic receivers 185 measure altered seismic waves 164 at surface 180 and transmit an altered seismic signal indicating altered seismic wave 28 across geophone lines 184 to recorder/processor carrier vehicle 110. This communication may be accomplished via wires conventionally, or with autonomous recorders where the data is later collected and transcribed to the recording media. A baseplate signal is transmitted from land vibrator 120 via radio wave link 112 to recorder/processor carrier vehicle 110 for processing. In this way, seismic survey data is collected and interpreted so as to reveal the nature and the geology of subterranean formation 182. The interpretation of seismic data is improved substantially by the discrete force measurements of sensor matrix 150 in that the data are inverted and separated using the true ground force instead of correlated with the pilot sweep or inverted with the estimated ground force of the vibe controller. By measuring the actual ground force and using for inversion and separation, the fidelity of the signal may be increased, and the source smear and distortion of the source may be reduced.

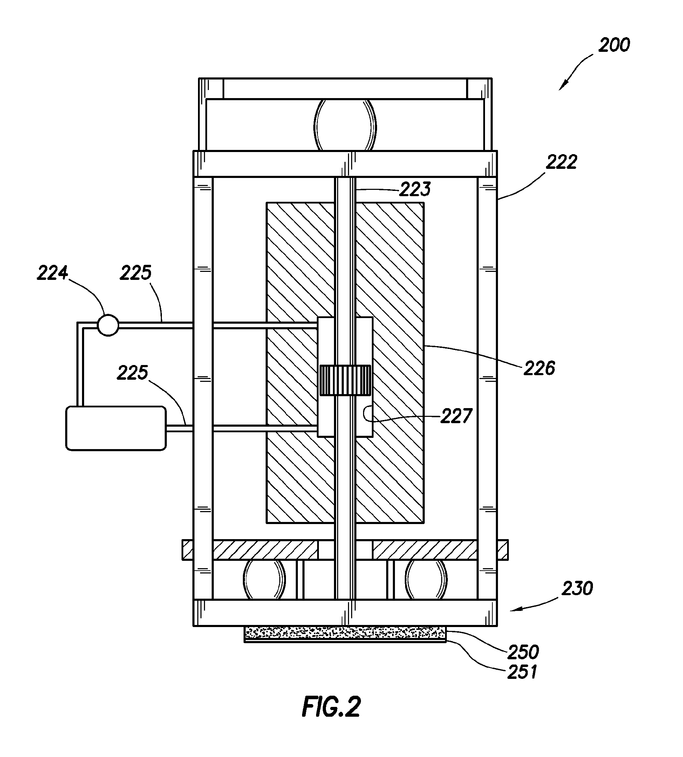

Figure 2 illustrates a side view of a seismic transducer having a sensor matrix affixed to a lower surface of a baseplate in accordance with one embodiment of the present invention. Seismic transducer apparatus 200 utilizes a reciprocating motion of reaction mass 225 to impart vibratory energy to baseplate 230.

More specifically, frame 222 supports and is rigidly connected to piston rod 223 and baseplate 230. Driver 224 pumps or otherwise supplies hydraulic fluid to hydraulic cylinder 227 through ports 225. In this way, driver 224 actuates reaction mass 226 about piston rod 223. When vibrations are induced by controlled hydraulic fluid flow into and from cylinder 227, reciprocating motion of reaction mass 226 is generated about piston rod 223. As reaction mass 226 is supported by frame 222, this reciprocating motion is transmitted to baseplate 230 via the inertia of reaction mass 226. The term, "supported," as used herein, explicitly includes being indirectly supported by frame 222, for example, by hydraulic fluid in hydraulic cylinder 227. In this way, vibratory energy is imparted to baseplate 230 corresponding to the motion of reaction mass 226. Sensor matrix 150 is secured to or otherwise affixed to the lower surface of baseplate 230. In this way, sensor matrix 250 is interposed between baseplate 230 and a ground surface (such as ground surface 180 depicted in Figure 1, either directly or indirectly. Sensor matrix 250 allows discrete force measurements of across the lower surface area of baseplate 250, which as described above, allow for the measure of the true ground force instead of some derived estimate of the actual output of the vibe.

In certain embodiments, protective cover 251, such as a steel cover, may be provided to offer additional protection to sensor matrix 250. To form a more robust sensor matrix, sensor matrix 250 may be formed a composite layer in some embodiments. Examples of suitable composite layers include, but are not limited to, fiber reinforced carbon, any natural or synthetic composite known in the art, or any combination thereof. Operating conditions of the seismic transducer will influence optimal sensor matrix dimensions and configuration. Accordingly, different thicknesses and materials may be required for different applications.

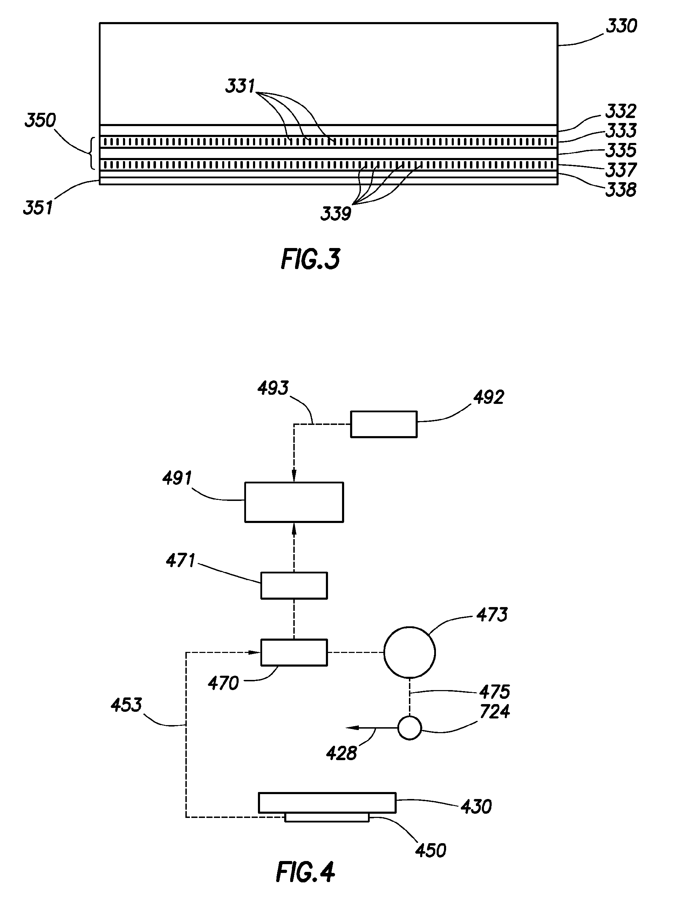

Figure 3 illustrates a side view of a baseplate having a sensor matrix affixed thereto with certain other optional enhancements in accordance with one embodiment of the present invention. More specifically, baseplate 330 is shown with sensor matrix 350 indirectly affixed to or otherwise secured to baseplate 330. Sensor matrix 350 is sandwiched between optional first insulation layer 332 and second insulation layer 338. Insulation layers 332 and 338 provide dampening about sensor matrix 350 to shield sensor matrix 350 from high frequency vibrations and incidental damage caused by vibration of the baseplate on sharp or spiky rocks or similar incompressible objects. The damping layer also reduces the distortion and ringing of the baseplate during the sweep much like a wet blanket placed on a bell that is struck will dampen the ringing sound of the bell. Thus, the damper layer may provide two functions, protection of the measurement matrix and damping of baseplate ringing. Insulation layers 332 and 338 may comprise any dampener material known in the art suitable for producing a damping or insulation effect on baseplate 330. Examples of suitable damping and insulation materials include, but are not limited to, rubber, carbon-fiber impregnated rubber, viscoelastic damping polymers, elastomeric composites, synthetic and natural elastomeric materials, or any combination thereof. Although first insulation layer 332 is shown interposed between baseplate 330 and sensor matrix 350, it is recognized that sensor matrix 350 may be affixed directly to the lower surface of the baseplate 330.

As shown before in the embodiment of Figure 2, protective cover 351 may be provided to offer additional protection during operation as desired. Protective cover 351 may be affixed directly to any of the layers shown here, including second insulation layer 338 or sensor matrix 350.

Sensor matrix 350 may be any sensor capable of measuring spatial displacement or force measurements to which sensor matrix is exposed during operation of baseplate 330. In certain embodiments, the spatial displacements of sensor matrix 350, (e.g. compressive spatial displacements) to which sensor matrix 350 is subjected, may be translated to force measurements as desired.

Sensor matrix 350 comprises a plurality of force sensors 331 and 339 capable of measuring forces at discrete points distributed along the surface of baseplate 330. In this way, sensor matrix 350 is capable of measuring a distribution of discrete forces along the surface of baseplate 330. Force sensors 331 and 339 may comprise any force sensor capable of measuring a spatial displacement or force measurement at a discrete location along the surface of baseplate 330. Examples of force sensors suitable for use with the present invention include, but are not limited to, conductivity sensors, capacitance sensors, piezoelectric sensors, conductive fluid sensors, or any combination thereof. In some embodiments, only one sensor grid 333 is necessary to produce the desired spatial displacement or force measurement.

Here, sensor matrix 350 comprises first sensor grid 333, conductive fluid layer 335, and second sensor grid 337. Each force sensor 331 first sensor grid 333 is directly opposite to a force sensor 339 of second sensor grid 337. As sensor matrix 350 is subjected to compressive forces, conductive fluid layer 335 compresses, reducing the distance between first force sensors 331 and second force sensors 339. The electrical signal produced by each force sensor 331 and 339 varies in proportion to the distance between each force sensor 331 and 339. In this way, a determination may be made at each force sensor 331 and 339 as to the spatial displacement or force exerted at each discrete force sensor 331 and 339. Again, a variety of sensors may be used to determine the distance or relative distance between corresponding force sensors, including voltage and resistance sensors. Where capacitance sensors are employed, the capacitance measurement may be inversely proportional to the distance between the first sensors and the second sensors.

Figure 4 illustrates a schematic of a system for using and processing sensor matrix measured data. In particular, sensor matrix 450 outputs sensor force measurement data 453 to processor 470. Processor 470 then computes a true ground force measurement based on the individual sensor force measurements from sensor matrix 450. The true ground force measurement may be determined by integrating or summing the individual sensor force measurements to arrive at a total integrated true ground force measurement for the sensor matrix. This summation would necessarily take into account the size of the force sensors contact patch with the ground, thus allowing any variation of different or similar sized force sensors to be used. The true ground force measurement may be compared to the pilot signal, that is, the desired ground force output. This information may in turn be used by controller 473 to adjust or modulate the controller output to driver 424 to regulate driver output 428 of driver 424. In this way, the sensor force measurement data 453 may be used to match the true ground force to the desired force output of a baseplate. Where driver 424 is a hydraulic pump, driver output 428 may be a pressurized hydraulic fluid for driving a reaction mass (not shown). Driver 424 may also be an electric source or other similar power output modules not limited to hydraulics. In certain embodiments, the functions of processor 470 and controller 473 may be combined into one integral unit.

Processor 470 may also output sensor force measurement data 453 and/or true ground force measurements of processor 470 to memory 471 for storage for later use. Sensor force measurement data 453 may be retrieved at a later time for use by external seismic processing 491. External seismic processing 491 applies a process known as inversion to force measurement data 453 and seismic data 493 retrieved from field recorders 492 to separate and sum individual shot records for further processing. Sensor force measurement data 453 may be used to adjust external seismic processing 491 to process seismic data 493 with much higher fidelity. This higher fidelity signal is due in part to a much cleaner ground force measurement, that is, a true ground force measurement that more closely matches the desired ground force measurement. Additionally, sensor force measurement data 453 may be used to more cleanly invert ZenSeis™ and/or HFVS style phase encoded data to obtain a higher signal to noise ratio before continuing with additional processing. Sensor force measurement data 453 may also be used to measure near surface statics and measure the near surface ground conditions like stiffness, viscosity, and shear modulus. These properties all have bearing on the interpretation and processing of the data to create a higher fidelity signal. This data is normally mapped to quality check the acquisition of the data and identify any anomalies or errors.

The enhancements described herein allow seismic transducers to operate at higher seismic frequencies ranges without producing substantial signal distortion or noise. In certain embodiments, seismic transducers of the present invention operate at frequency ranges extending into the higher seismic frequency range of at least about 50 cycles per second, at least about 150 cycles per second, and/or at least about 250 cycles per second.

Although the embodiments of Figures 1, 2, and 3 show a sensor matrix extending across the entirety of the lower surface of the baseplate, it is recognized that the sensor matrix may extend across only a portion or along portions of the lower surface of the baseplate. Indeed, in certain embodiments, sensor matrix 450 may be secured or otherwise affixed to about 30% to about 70% of the surface area of baseplate 430. In other embodiments, sensor matrix 451 may extend across about 70% of the surface area baseplate 430. In some embodiments, sensor matrix 451 may extend across at least about 70% of the surface area baseplate 430. In still other embodiments, sensor matrix 450 may be comprised of a plurality of individual sensor matrices, separately affixed to baseplate 430. Among other advantages, providing a plurality of individual sensor matrix elements allows for ease of replacement if individual elements are damaged or if a different type of sensor matrix is desired for a particular application.

It is explicitly recognized that any of the elements and features of each of the devices described herein are capable of use with any of the other devices described herein with no limitation. Furthermore, it is explicitly recognized that the steps of the methods herein may be performed in any order except unless explicitly stated otherwise or inherently required otherwise by the particular method.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered or modified and all such variations and equivalents are considered within the scope and spirit of the present invention.

## Claims

1. A method for measuring force distributions from a seismic source comprising the steps of:
providing a sensor matrix comprising a plurality of force sensors, the sensor matrix optionally being formed of a composite layer, such as a composite layer comprising fiber reinforced carbon, wherein the force sensors are distributed throughout a substantially planar surface, wherein the force sensors are adapted to individually measure a compressive force applied to each sensor perpendicular to the substantially planar surface;
providing a seismic transducer apparatus comprising a frame, a baseplate attached to the frame, the baseplate having a lower surface and having the sensor matrix affixed, directly or indirectly, to the lower surface, optionally wherein the sensor matrix extends across at least 70% of the lower surface of the baseplate, such as across substantially the entirety of the lower surface of the baseplate, the seismic transducer apparatus further comprising a reaction mass supported by the frame, and a driver configured to actuate the reaction mass in a reciprocating motion so as to impart vibratory energy to the baseplate;
engaging the ground surface with the seismic transducer apparatus;
actuating the reaction mass via an output of the driver in a reciprocating motion;
allowing vibratory energy to be imparted to the baseplate;
determining a plurality of force measurements from the sensor matrix, each force measurement corresponding to each force sensor.

2. The method of claim 1 further comprising providing a protective cover affixed to the sensor matrix wherein the step of engaging the ground surface comprises directly engaging the ground surface with the protective cover.

3. The method of claim 1 or claim 2 wherein each force measurement is determined by measuring a spatial displacement resulting from a compression of a portion of the sensor matrix.

4. The method of claim 3 wherein each force sensor comprises a capacitance sensor for measuring a spatial displacement thereof, a piezoelectric sensor for measuring a spatial displacement thereof or a conductive fluid sensor for measuring a spatial displacement thereof.

5. The method of claim 4 wherein the force sensors are conductive fluid sensors, which comprise:
a first sensor grid of first voltage sensors;
a second sensor grid of second voltage sensors;
a conductive fluid layer interposed between the first sensor grid and the second sensor grid;
wherein each first voltage sensor is paired with a corresponding second voltage sensor to form a plurality of paired voltage sensors;
wherein each paired voltage sensor measures a voltage or conductivity across the conductive fluid layer, wherein each voltage or conductivity is proportional to compression of the conductive fluid layer and a distance between each paired voltage sensor.

6. The method of claim 4 wherein the force sensors are conductive fluid sensors, which comprise:
a first sensor grid of first resistance sensors;
a second sensor grid of second resistance sensors;
a resistive fluid layer interposed between the first sensor grid and the second sensor grid;
wherein each first resistance sensor is paired with a corresponding second resistance sensor to form a plurality of paired resistance sensors;
wherein each paired resistance sensor measures a resistance across the resistive fluid layer, wherein each resistance is inversely proportional to compression of the resistive fluid layer and the distance between each paired resistance sensor.

7. The method of claim 4 wherein the force sensors are conductive fluid sensors, which comprise:
a first grid of first conductors;
a second grid of second conductors;
a dielectric layer interposed between the first sensor grid and the second sensor grid;
wherein each first conductor is paired with a corresponding second conductor to form a plurality of paired conductors;
wherein each paired conductor measures a capacitance across the dielectric layer, wherein the capacitance is inversely proportional to the distance between each paired conductor.

8. The method of any of the preceding claims wherein the sensor matrix is affixed indirectly to the lower surface of the baseplate with a first insulation layer interposed between the baseplate and the sensor matrix such that the first insulation layer directly interfaces with the lower surface of the baseplate and an upper surface of the sensor matrix, the method optionally also comprising the steps of:
providing a second insulation layer affixed to a lower surface of the sensor matrix; and, optionally,
providing a protective steel plate affixed to a lower surface of the second insulation layer..

9. The method of any of the preceding claims wherein the driver is actuated by a controller and the controller is actuated by a pilot signal wherein the method further comprises the steps of:
determining a true ground force measurement from the force measurements based on the force measurements from the sensor matrix;
comparing the pilot signal to the true ground force measurement to produce a difference; and
adjusting the output of the driver so as to minimize the difference between the pilot signal and the true ground force measurement.

10. The method of claim 9 further comprising the steps of:
providing a controller communicatively coupled to the driver wherein the step of adjusting the output of the driver comprises modulating a controller output to the driver; and
storing the true ground force measurement and the force measurements in a memory for later seismic processing

11. The method of claim 9 or claim 10 wherein the step of determining the true ground force measurement comprises the step of integrating the force measurements from the sensor matrix that are individually measured.

12. The method of any of the preceding claims further comprising the step of actuating the reaction mass at an operating frequency range extending into a higher seismic frequency range above 50 cycles per second, such as above 150 cycles per second, for example between 50 and 500 cycles per second or between 150 and 400 cycles per second.

13. The method of any of the preceding claims further comprising the step of providing an external dampener affixed to the baseplate, wherein the external dampener is an elastomeric external dampener.

14. A seismic transducer apparatus for inducing energy waves in an elastic medium comprising comprising:
a sensor matrix comprising a plurality of force sensors, wherein the force sensors are distributed throughout a substantially planar surface, wherein the force sensors are adapted to individually measure a compressive force applied to each sensor perpendicular to the substantially planar surface;
a seismic transducer apparatus comprising a frame, a baseplate attached to the frame, the baseplate having a lower surface and having the sensor matrix affixed to the lower surface, a reaction mass supported by the frame, a driver configured to actuate the reaction mass in a reciprocating motion so as to impart vibratory energy to the baseplate;
a processor communicatively coupled to the sensor matrix wherein the processor is configured to receive a force measurement from each force sensor and determine a true ground force measurement;
a feedback controller communicatively coupled to the processor;
wherein the processor is further configured to compare the true ground force measurement to the pilot signal of the feedback controller to produce a difference between the true ground force measurement and the pilot signal; and
wherein the feedback controller is configured to vary the pilot signal to minimize the difference between the true ground force measurement and the pilot signal.

15. The seismic transducer apparatus of claim 14 wherein the processor and the feedback controller are integrated into one element.
